# EUROPEAN PATENT APPLICATION

(11) **EP 1 486 744 A1**
(43) Date of publication of application: **15.12.2004**
(21) Application number: 04013734.1
(22) Date of filing: 11.06.2004
(51) Int. Cl.: F25C 1/14

(54) **Protecting device of an auger ice-making machine**

(30) Priority: 11.06.2003 JP 2003166713
(71) Applicant: Hoshizaki Denki Kabushiki Kaisha, Toyoake, Aichi (JP)
(72) Inventor: Nomura, Tomohito, Sakae-cho, Toyoake, Aichi (JP)
(74) Representative: Hofer, Dorothea, Dipl.-Phys.

(57) **Abstract**

A protecting device of an auger ice-making machine which enables obtaining high responsiveness to detection of an abnormality, and identification of abnormal/normal stops.

The protecting device 42 has a rotating-speed detector 28 for detecting the rotating speed of the auger motor AM, and an electric current detector 38 for detecting the electric current value of the auger motor AM. The machine is brought to a total stop when the protecting circuit 36 of the protecting device 42 detects that the first detection value obtained by the rotating-speed detector 28 is equal to or less than a first threshold value. The protecting device 42 is also constituted so as to activate display/indication means 40 to display/indicate an abnormality if the second detection value obtained by the electric current detector 38 when the first detection value is equal to or less than the first threshold value exceeds a second threshold value.

## Description

### Field of the Invention

The present invention relates to a protecting device of an auger ice-making machine, and more particularly, to a protecting device of an auger ice-making machine in which the ice frozen on an inner wall surface of a refrigeration casing is fed while being scraped (chipped) by an auger screw rotationally driven by an auger motor.

### Description of the Related Art

In the kitchens of coffee shops, restaurants, and the like, ice-making machines for manufacturing blocks of ice of required shapes have been conveniently used for a long time, and these types of machines include an auger type of ice-making machine used for continuously manufacturing blocks of ice in the form of small pieces such as ice chips or ice flakes. In the auger ice-making machine, when ice-making operation is started with ice-making water stored within a cylindrical refrigeration casing at a required level, the casing is forcedly cooled by a refrigerant circulating through an evaporation pipe connected to a refrigerating system. Hence, the ice-making water starts freezing progressively from an inner wall surface of the casing, and thus thin ice of a laminar form is formed. The refrigeration casing has an auger screw inserted thereinto, and when the auger screw is rotationally driven by an auger motor, the thin ice frozen on the inner wall surface of the casing is fed upward by the auger screw while being scraped into a flake form thereby. While passing through a push head disposed in an upper inner section of the refrigeration casing, the flake-form ice fed by the auger screw is compressed, whereby moisture is removed from the ice and compressed ice is manufactured. The compressed ice that has thus been obtained is discharged and stored in a stocker.

In the foregoing auger ice-making machine, because of various causative factors during ice-making operation, the flake-form ice fed by the auger screw may not become able to easily pass through the above-mentioned push head. If the ice-making operation is continued in this state, all the ice-making water within the refrigeration casing could become frozen or since the auger motor makes an attempt to continue rotating, the resulting excessive load on the auger motor could result in the motor itself being thermally or mechanically damaged or in an ice-making mechanism being damaged.

Therefore, there has been proposed a technology for coping with the above-mentioned abnormality by providing a protecting device that detects a rotating speed of the auger motor and conducts control so as to stop the motor (or the machine) if the motor speed detected becomes less than a required threshold value (for example, Japanese Unexamined Patent Application Publication No. 2002-318043).

### Summary of the Invention

For the protecting device that detects the rotating speed of the auger motor and stops the machine as described above, it has not been possible to identify whether a decrease in the motor speed is due to overloading caused by the above-mentioned abnormality, or due to a normal stop by a press of a stopping button on the machine. Therefore, there are the problems that, for example, a user different from another user who pressed the stopping button may mistake the particular event for an abnormal stop and waste time in locating the cause of the event, or conversely, despite an abnormal stop, may restart the machine.

When the motor speed is equal to or less than a fixed value and an electric current value is in excess of a fixed value, it can be judged that the decrease in the motor speed occurred due to overloading, and thus stopping the machine. In this case, however, it is indicated as a drawback that low responsiveness of the protecting device to changes in the electric current value not only makes the device unable to rapidly respond to the occurrence of an abnormality and increases the risk of machine trouble occurring, but also makes it impossible for the device to utilize the advantage of detecting highly responsive rotating speeds.

That is to say, the present invention has been proposed to solve the drawback suitably in view of the foregoing drawback inherent in the protecting device of an auger ice-making machine that uses the above-mentioned conventional technology. An object of the present invention is to provide a protecting device of an auger ice-making machine which has high responsiveness to detection of an abnormality and is capable of identifying abnormal/normal stops.

### Means for Solving the Problems

In order to solve the above-described problems and achieve its intended object, the present invention provides a protecting device of an auger ice-making machine which has a refrigeration casing for freezing ice on an inner wall surface of the casing, an auger screw rotatably disposed inside the casing in order to feed, while scraping, the ice frozen on the casing inner wall surface and an auger motor for rotationally driving the auger screw;
wherein the protecting device comprises:
rotating-speed detection means for detecting a rotating speed of the auger screw or of the auger motor;
electric current detection means for detecting an electric current value of the auger motor; and
protection means for conducting stop control of the auger motor when a first detection value obtained by the rotating-speed detection means is equal to or less than previously set first threshold value, and conducting abnormality-associated processing if a second detection value obtained by the electric current detection means when the first detection value is equal to or less than the first threshold value exceeds a previously set second threshold value.

### Brief Description of the Drawings

Fig. 1 is a schematic diagram showing an auger ice-making machine for which is adopted the protecting device according to a preferred embodiment of the present invention;
Fig. 2 is a graph showing the relationship between a rotational speed of an auger motor and a first threshold value;
Fig. 3 is a graph showing the relationship between an electric current value of an auger motor and a second threshold value;
Fig. 4 is a flowchart showing rotating-speed detection control by the protecting device according to the above embodiment;
Fig. 5 is a flowchart showing an example of a modified version of rotating-speed detection control by the protecting device according to the above embodiment;
Fig. 6 is a flowchart showing the flow of control by the protecting device according to a first alternative example;
Fig. 7 is a flowchart showing the flow of control by the protecting device according to a second alternative example; and
Fig. 8 is a flowchart showing the flow of control by the protecting device according to a third alternative example.

### Description of the Preferred Embodiment

Next, a preferred embodiment of a protecting device of an auger ice-making machine according to the present invention is described below referring to the accompanying drawings.

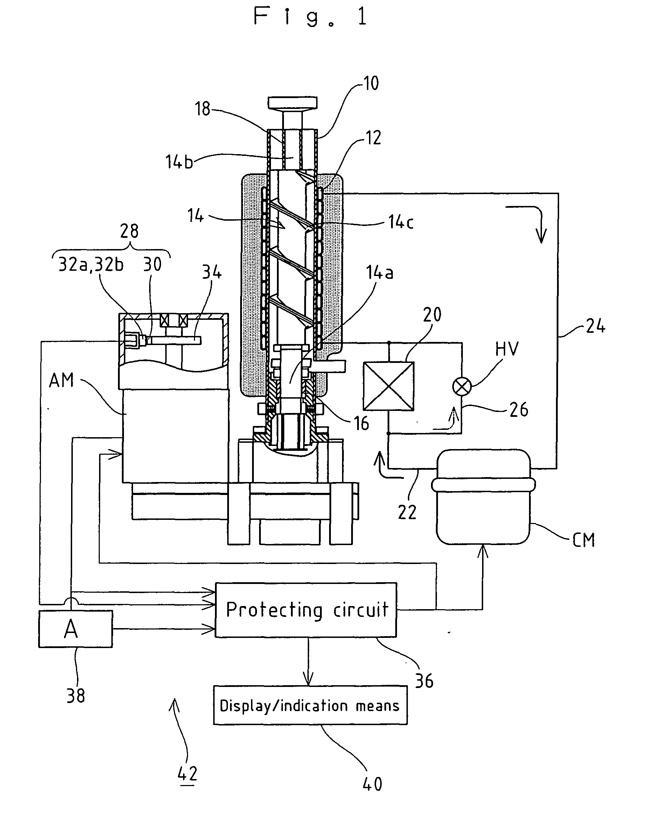

Fig. 1 shows a schematic construction of an auger ice-making machine employing a protecting device in an embodiment of the present invention. In Fig. 1, on an outer surface of a cylindrical refrigeration casing 10, an evaporation pipe 12 communicating with a refrigerating system in the form of an evaporation section is tightly wound, and the refrigerating system is constructed so as to forcibly cool the refrigeration casing 10 by circulating a refrigerant through the evaporation pipe 12 during ice-making operation. In addition, the refrigeration casing 10 is adapted so that when ice-making water is supplied from an ice-making water tank (not shown) at a required level and ice-making operation is started, the refrigeration casing 10 is forcibly cooled. Hence, the ice-making water starts freezing gradually from an inner wall surface of the casing, and thus thin ice of a laminar form is formed.

Inside the refrigeration casing 10, an auger screw 14 is inserted, a lower shaft 14a thereof is rotatably supported by a lower bearing 16 disposed at a lower section of the refrigeration casing 10, and an upper shaft 14b is rotatably supported by a push head 18 disposed in an upper inner section of the refrigeration casing 10. The auger screw 14 is rotationally driven by an auger motor AM disposed at a lower section of the ice-making machine. In addition, a scraping cutter blade 14c with an outside diameter slightly smaller than an inside diameter of the refrigeration casing 10 is helically formed on the auger screw 14, and the thin ice frozen on the inner wall surface of the casing 10 is fed upward while being scraped by the scraping cutter blade 14c of the auger screw 14 rotationally driven by the auger motor AM.

During its passage through the push head 18, the flake-like ice fed upward by the auger screw 14 while being scraped is then compressed, whereby moisture is removed from the ice and compressed ice is manufactured. The compressed ice that has thus been obtained is discharged and stored in a stocker (not shown) disposed at an upper section of the refrigeration casing 10.

The refrigerating system, as shown in Fig. 1, has a compressor CM and a condenser 20, and is constructed so that after a high-temperature vaporized refrigerant (hot gas) has been compressed by the compressor CM, the refrigerant flows into the condenser 20 via a pipeline 22. The vaporized refrigerant obtained by condensation with the condenser 20 further flows into the evaporation pipe 12 via a capillary tube (not shown), and then the resulting vaporization depriving the refrigeration casing 10 of heat-of-vaporization and cooling the refrigeration casing 10 to a temperature below zero degrees. The vaporized refrigerant, after cooling the refrigeration casing 10, is returned from the evaporation pipe 12 to the compressor CM via a pipeline 24, and this cycle is subsequently repeated.

The pipeline 22 connecting the compressor CM and the condenser 20 includes a bypass pipe 26 detouring the condenser 20 and communicating directly with the evaporation pipe 12, and is adapted so that the vaporized refrigerant (hot gas) from the compressor CM can be supplied to the evaporation pipe 12 by switching a hot-gas valve HV This means that, for example, when the ice overgrown by supercooling of the refrigeration casing 10 locks the auger screw 14 during rotation thereof, supplying the hot gas to the evaporation pipe 12 by switching the hot-gas valve HV allows the resulting heat to release the lock. The above-mentioned auger ice-making machine has a power supply button and a stopping button (not shown).

The auger ice-making machine also has a rotating-speed detector (rotating-speed detection means) 28 that detects rotating-speed changes (rotating speeds) of the auger motor AM. The rotating-speed detector 28 is composed of a combination of a permanent magnet 30 and two Hall elements 32a, 32b, with the permanent magnet 30 being disposed on a rotary disc 34 connected to a rotating shaft of the auger motor AM. The Hall elements 32a, 32b are formed with a required angle difference at a fixed section of a housing (or the like) of the auger motor AM, and detection surfaces of both the Hall elements 32a, 32b face a moving path of the permanent magnet 30.

When the auger motor AM is rotated, therefore, the Hall elements 32a, 32b each generate a pulse each time the passage of the permanent magnet 30 is detected, and the frequency of generation of the pulse is in proportion to the rotating speed of the auger motor AM. Accordingly, a parameter proportional to the particular rotating speed of the auger motor AM is supplied by converting the number of pulses which the Hall elements 32a, 32b generates, into that rotating speed. The Hall elements 32a,32b are connected to a protecting circuit 36 that functions as protecting means. The first Hall element 32a generates a first impulse group, and the second Hall element 32b generates a second impulse group. In this case, since the two Hall elements 32a, 32b are displaced from each other by a required central angle, the distance and phase displacement angle between impulses in the first impulse group and the second impulse group indicate a rotating speed of the rotary disc 34 within the auger motor AM.

More specifically, the inter-pulse distance and phase displacement angle occurring between the first impulse group and the second impulse group can be used to detect a decrease in the rotating speed of the auger motor AM. The protecting circuit 36 is constructed so that when it detects that the value obtained as a first detection value R by the rotating-speed detector 28 is equal to or less than a previously set first threshold value X, operation of the auger ice-making machine is brought to a total stop (auger motor AM stop).

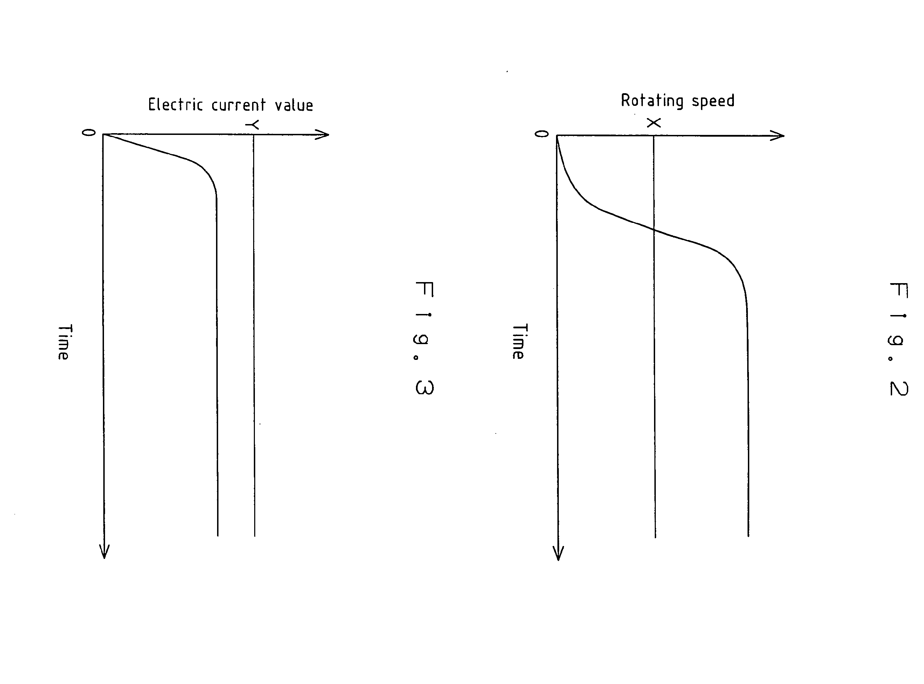

Fig. 2 is a graph showing the rotating speed of the auger motor AM with passage of time. The solid line shown in Fig. 2 indicates that the motor speed starts increasing in a required curvilinear form from a state of speed 0, and that after a shift to steady operation, the motor speed progresses in an approximately flat condition. In Fig. 2, symbol X denotes a first threshold value smaller than, by a required level, the motor speed existing after the shift to steady operation. The first threshold value X is set to be equal to a rotating speed associated with a stage in which, if the rotating speed of the auger motor AM decreases below that of the motor AM existing during steady operation (i.e., a steady rotating speed), the machine needs to be immediately stopped. In addition, the protecting circuit 36 is constructed so as to constantly monitor whether the first detection value R indicating the rotating speed of the auger motor AM is equal to or less than the first threshold value X, and then if necessary, conduct abnormality-associated processing.

Furthermore, the auger ice-making machine has an electric current detector (electric current detection means) 38 for detecting a supply current to the auger motor AM (i.e., an electric current value of the motor AM), and the detector 38 is connected to the protecting circuit 36. Furthermore, the protecting circuit 36 is constructed so that if the value obtained as a second detection value S by the electric current detector 38 when the first detection value R of the rotating-speed detector 28 is equal to or less than the first threshold value X exceeds a previously set second threshold value Y, display/indication means 40 connected to the protecting circuit 36 is activated to display/indicate an abnormality. The display/indication of an abnormality can take various forms such as turning on a lamp or displaying, on a display screen, "ABNORMAL STOP" or other wording to notify the occurrence of the abnormality. In the present embodiment, a protecting device 42 is constituted of the protecting circuit 36, the rotating-speed detector 28, the electric current detector 38, and the display/indication means 40.

Fig. 3 is a graph showing the value of the current flowing through the auger motor AM with passage of time. The solid line shown in Fig. 3 indicates that the electric current value starts increasing in a required curvilinear form from a state of value 0, and that after a shift to steady operation, the electric current value progresses in an approximately flat condition. In Fig. 3, symbol Y denotes a second threshold value greater than, by a required level, the electric current value obtained after the shift to steady operation. More specifically, the second threshold value Y indicates whether an electric current exceeding a maximum permissible value is flowing into the auger motor AM. The protecting circuit 36 is configured so as to constantly monitor whether the electric current value of the auger motor AM (i.e., the second detection value S) is greater than the second threshold value Y, and if necessary, conduct abnormality-associated processing.

### (Operation of the present embodiment)

Next, the operation of the protecting device of the auger ice-making machine in the above embodiment is described below.

When ice-making operation is started in the auger ice-making machine, the refrigeration casing 10 is forcedly cooled by exchanging heat with the refrigerant circulated through the evaporation pipe 12. Consequently, the ice-making water supplied from the ice-making water tank to the refrigeration casing 10 starts freezing gradually from the inner wall surface of the casing, and thin ice of a laminar form is formed. Next, when the auger screw 14 disposed inside the refrigeration casing 10 is rotationally driven by the auger motor AM, the thin ice is fed upward while being scraped by the scraping cutter blade 14c of the screw 14. The flake-like ice fed upward by the auger screw 14 is then compressed during passage through the push head 18, and the compressed ice that has thus been obtained is discharged and stored in a stocker.

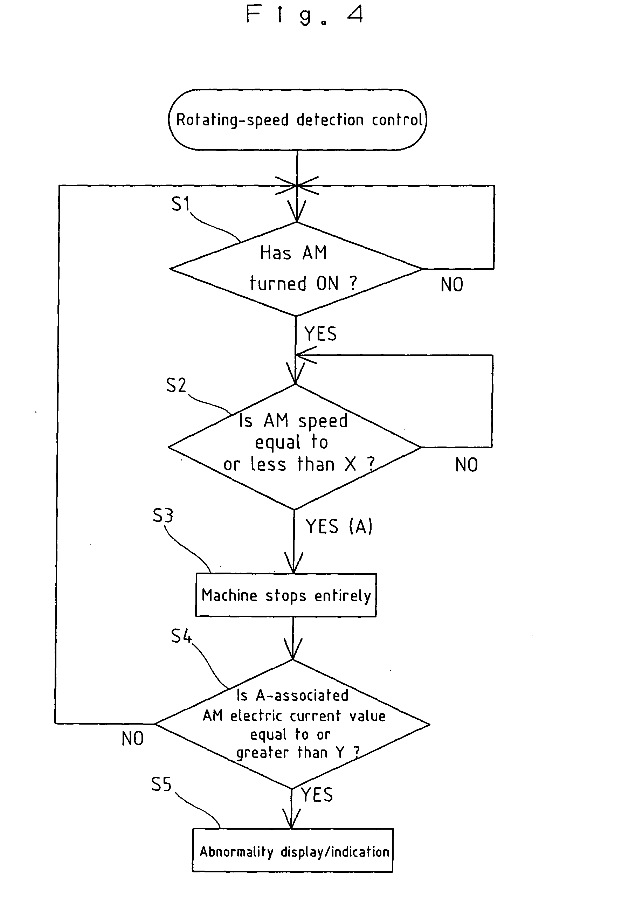

In the protecting device 42, rotating-speed detection control shown in Fig. 4 is executed by the start of ice-making operation. More specifically, whether the auger motor AM has turned ON is judged in step S1, and after confirmation of the fact that the motor AM has turned ON (in this case, YES is presented as judgment results), control proceeds to step S2 to judge whether the rotating speed of the auger motor AM is equal to or less than the first threshold value X shown in Fig. 2. If the judgment results in step S2 are negative (NO), steady operation is continued as such since the abnormality mentioned above is judged not to be occurring.

In contrast, when the protecting circuit 36 detects that the first detection value R, the rotating speed of the auger motor AM, is equal to or less than the first threshold value X, the judgment results in step S2 become positive (YES) and the flow goes to step S3 to entirely stop the machine. That is, the auger motor AM, the compressor CM, and the like are stopped since a serious abnormality is judged to have occurred during steady operation. In this way, since the protecting device 42 according to the present embodiment is capable of detecting highly responsive rotating speeds and coping with the occurrence of an abnormality, the protecting device 42 can immediately respond to the occurrence of an abnormality and reduce the risk of trouble occurring in the auger screw 14 or other components of the ice-making mechanism.

If the machine is entirely stopped in step S3, it is then judged in step S4 whether the electric current value of the auger motor AM existing when the judgment results in step S2 are positive (YES) is equal to or greater than the second threshold value Y shown in Fig. 3. When the protecting circuit 36 detects that the second detection value S, i.e., the electric current value of the auger motor AM that is detected by the electric current detector 38, is equal to or greater than the second threshold value Y, since an overload current is judged to be flowing into the auger motor AM, the judgment results in step S4 become positive (YES), the flow goes to step S5, and abnormality display/indication is conducted by the display/indication means 40. Thus, the user can identify that the stop of the machine is due to the occurrence of the abnormality, and the machine can be prevented from being inadvertently restarted.

If the judgment results in step S4 are negative (NO), the flow returns to the first step S1. In other words, even when the machine is brought to a normal stop by a press of the stopping button of the machine, although positive judgment results (YES) are presented in step S2 during rotating-speed detection control, the second detection value S of the electric current detector 38 at that time decreases, without exceeding the second threshold value Y, from the value obtained during steady operation. Accordingly, the judgment results in step S4 become negative (NO). When the machine comes to a normal stop, therefore, abnormality display/indication is not conducted by the display/indication means 40 and hence the user can realize that the machine in a stopped state has come to a normal stop. This, in turn, makes it possible to prevent the user from mistaking the normal stop for an abnormal stop and from wasting time in locating the cause of the stop. In addition, during rotating-speed detection control shown in Fig. 4, after the machine entirely stopped, it is automatically reset to a normal state when the abnormality is eliminated.

### (Example of a Modified Version)

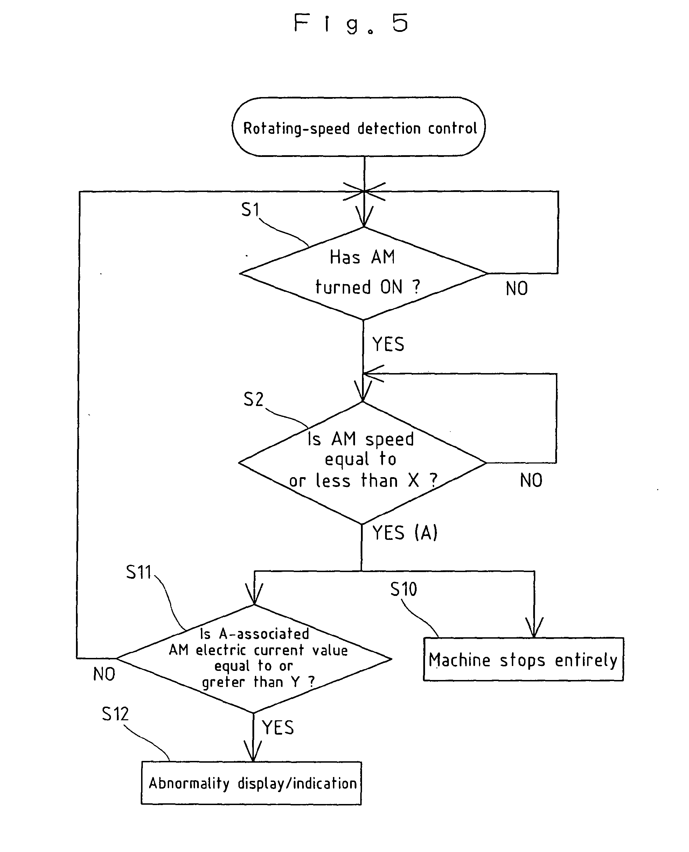

Fig. 5 is a flowchart showing an example of a modified version of rotating-speed detection control. Only sections different from those shown in Fig. 4 are described below. More specifically, if the judgment results in step S2 are positive (YES), the flow goes to steps S10 and S11 in parallel. In step S10, the machine is entirely stopped, and in step S11, it is judged whether the electric current value of the auger motor AM (i.e., the second detection value S) existing when the judgment results in step S2 are positive (YES) is equal to or greater than the second threshold value Y. If the judgment results in step S11 are positive (YES), control is transferred to step S12 and abnormality display/indication is conducted by the display/indication means 40. If the judgment results are negative (NO), the flow returns to step S1 without abnormality display/indication being conducted. In this example of rotating-speed detection control, after the machine entirely stopped, when an abnormality is eliminated, the machine is reset to a normal state by manual resetting operations of a user.

### (First Alternative Example)

In addition to detecting the rotating speed of the above-mentioned auger motor AM, it is possible to constantly monitor the voltage input to the motor AM and to stop the machine or display/indicate an abnormality, depending on a particular change in the input voltage. That is, it is possible to provide a voltage detector (not shown) that detects the input voltage to the auger motor AM, and connect the detector to the above-mentioned protecting circuit 36. The protecting circuit 36 in this case is set so that when a previously set first high voltage (for example, 20% high voltage relative to a rated voltage) is detected that requires immediate machine stoppage, a voltage abnormality is displayed/indicated by the display/indication means 40, and so that the machine is entirely stopped in that case.

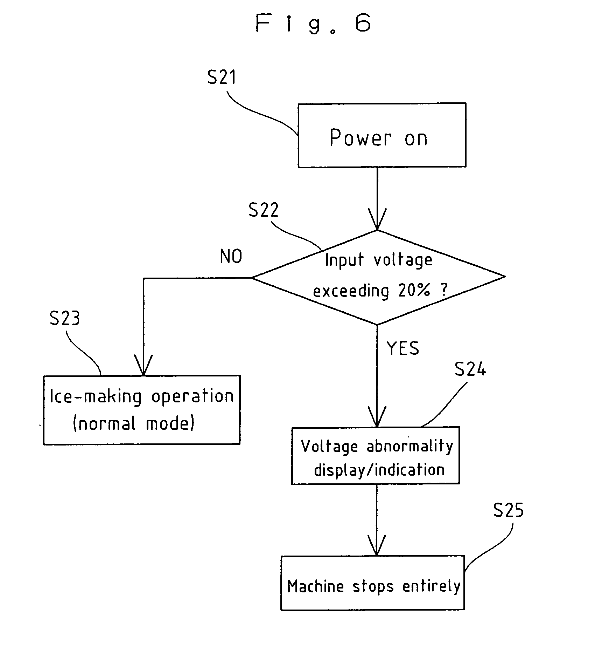

In the first alternative example as constituted above, as shown in Fig. 6, when power is turned on in step S21, whether the input voltage is equal to or greater than 20% of a rated voltage is judged in step S22. If the judgment results in step S22 are negative (NO), i.e., if the above-mentioned voltage detector detects the first high voltage, since no abnormality is judged to be occurring, the flow goes to step S23 and ice-making operation is started. On the other hand, when the judgment results in step S22 are positive (YES), a voltage abnormality is judged to have occurred. Consequently, the flow goes to step S24, in which the voltage abnormality is then displayed/indicated. After this, the machine is entirely stopped in step S25.

To describe in detail, the user can understand that the machine has been stopped by the abnormality of the input voltage to the auger motor AM by confirming the display/indication on the display/indication means 40. Hence, the user can accurately identify the cause of the abnormality and reduce repair time. In other words, if a voltage abnormality associated with the abnormal stop due to the input voltage is displayed/indicated, the user needs only to confirm input voltage-related sections/items, wiring, and the like. The user does not need to locate the cause of the abnormality by, for example, disassembling the mechanical sections of the machine. Conversely, if no voltage abnormality is displayed/indicated, the user needs only to confirm the mechanical sections and the like by, for example, disassembling each of the sections, and is capable of reducing the time required for repair.

### (Second Alternative Example)

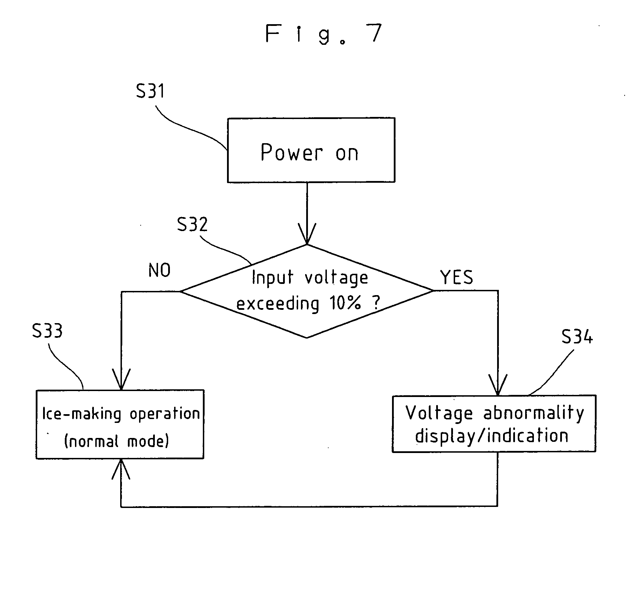

In the above first alternative example, the input voltage is set in order for the machine to be entirely stopped when the previously set first high voltage is detected. However, as shown in Fig. 7, only display/indication relating to the abnormality of a voltage may be conducted by the display/indication means 40 when a second voltage (for example, 10% high voltage relative to a rated voltage) is detected that is lower than the first high voltage set in the first alternative example and does not require immediate stoppage of the machine. Voltage abnormality display/indication information in this case is to be stored in the display/indication means 40 so that when the machine is stopped by the protecting device 42, the information can be confirmed.

In the second alternative example as constituted above, as shown in Fig. 7, when power is turned on in step S31, whether the input voltage is equal to or greater than 10% of a rated voltage is judged in step S32. If the judgment results in step S32 are negative (NO), i.e., if the above-mentioned voltage detector detects the second high voltage, since no abnormality is judged to be occurring, the flow goes to step S33 and ice-making operation is started. On the other hand, when the judgment results in step S32 are positive (YES), a voltage abnormality is judged to have occurred. Consequently, the flow goes to step S24 and the voltage abnormality is displayed/indicated. Even in this case, however, ice-making operation is started in step S33 without the machine being entirely stopped.

This means that when the machine is stopped by the protecting device 42, the user can understand, by confirming the display/indication information stored within the display/indication means 40, that the input voltage to the auger motor AM has become abnormal. Hence, the user can accurately identify the cause of the abnormality and reduce repair time.

### (Third Alternative Example)

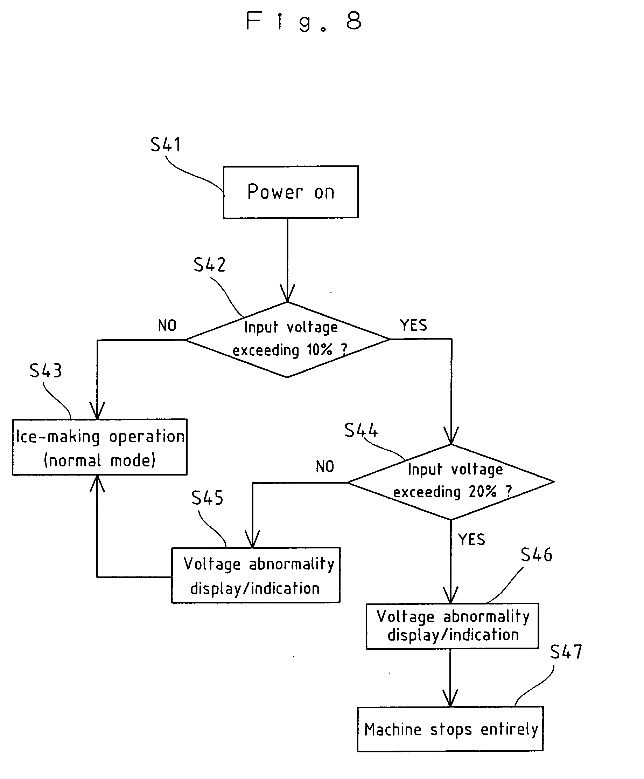

In a third alternative example, it is possible to adopt the constitution that is a combination of the two types of constitution described in the first alternative example and the second alternative example. More specifically, in the third alternative example, as shown in Fig. 8, when power is turned on in step S41, whether the input voltage is equal to or greater than 10% of a rated voltage is judged in step S42. If the judgment results in step S42 are negative (NO), since no abnormality is judged to be occurring, the flow goes to step S44, in which is then judged whether the input voltage is equal to or greater than 20% of the rated voltage. If the judgment results in step S44 are negative (NO), a voltage abnormality, although not as serious as requiring immediate machine stoppage, is judged to be occurring. Consequently, the flow goes to step S45 and after display/indication of the voltage abnormality, the flow returns to step S43, in which ice-making operation is then started.

When the judgment results in step S44 are positive (YES), a serious voltage abnormality is judged to have occurred. As a result, the flow goes to step S46, in which the voltage abnormality is then displayed/indicated. After this, the machine is entirely stopped in step S47.

### (Modification Example)

Although, in each of the above Examples, description has been given of auger motor speed detection with the rotating-speed detector (rotating-speed detection means), it is possible to adopt the structure that detects a rotating speed of the auger screw rotated by the auger motor. In addition, although a combination of a permanent magnet and Hall elements has been exemplified as the rotating-speed detector, it is possible to adopt a rotary encoder, a pulse encoder, or any other means capable of detecting the number of rotations. Furthermore, although, in the above Examples, an electric current detector has been employed as the electric current detection means for detecting an electric current value of the auger motor, a current-to-voltage converter that generates an output voltage according to a particular change in the electric current value of the auger motor may be used instead. Besides, although, in the above Examples, the protecting circuit is configured so as to activate the display/indication means to display/indicate an abnormality if the value detected by the electric current detector when the first detection value of the rotating-speed detector is equal to or less than the first threshold value exceeds a previously set second threshold value, it is possible to adopt the abnormality-associated constitution that operates alarm means capable of notifying the abnormality to a user by, for example, sounding a buzzer or turning on a lamp.

As described above, in the protecting device of an auger ice-making machine according to the present invention, since the detection of an abnormality is based on the detection of the highly responsive rotating speeds of the auger motor or of the auger screw and stops the motor, it is possible to immediately respond to the occurrence of the abnormality and reduce the risk of trouble occurring. In addition, if an abnormality occurs and the motor is stopped, since the abnormality is displayed/indicated in an associated relationship with respect to an electric current value, the user can properly perceive whether the machine has come to an abnormal stop or a normal stop, and thus, inconvenience due to a misconception can be prevented from occurring.

## Claims

1. A protecting device of an auger ice-making machine which has: a refrigeration casing (10) for freezing ice on an inner wall surface of the casing (10); an auger screw (14) rotatably disposed inside the casing (10) in order to feed, while scraping, the ice frozen on the casing inner wall surface; and an auger motor (AM) for rotationally driving the auger screw (14):
wherein said protecting device comprises:
rotating-speed detection means (28) for detecting a rotating speed of the auger screw (14) or of the auger motor (AM);
electric current detection means (38) for detecting an electric current value of the auger motor (AM); and
protection means (36) for conducting stop control of the auger motor (AM) when a first detection value (R) obtained by said rotating-speed detection means (28) is equal to or less than a previously set first threshold value (X), and conducting abnormality-associated processing if a second detection value (S) obtained by said electric current detection means (38), when the first detection value (R) is equal to or less than the first threshold value (X), exceeds a previously set second threshold value (Y).

2. The protecting device according to claim 1, which has electric voltage detection means for detecting the input voltage of the anger motor (AM),
wherein the protection means (36) stops the anger motor (AM) when the input voltage exceeds a previously set third threshold value.
